# EUROPEAN PATENT APPLICATION

(11) **EP 3 012 079 A1**
(43) Date of publication of application: **27.04.2016**
(21) Application number: 13887445.8
(22) Date of filing: 17.06.2013
(51) Int. Cl.: B29C 35/08, B29C 67/00

(54) **CURING APPARATUS FOR 3D PRINTER, USING ULTRAVIOLET LIGHT EMITTING DIODE**

(71) Applicant: Biomedical 3D Printing Co., Ltd, Seoul 04101 (KR)
(72) Inventor: KIM, Nam Soo, Seoul 156-836 (KR); HWANG, Se Yeon, Yangju-si Gyeonggi-do 482-862 (KR); HONG, Seong Ik, Seoul 139-751 (KR); HWANG, Ji Hyun, Gimpo-si Gyeonggi-do 415-733 (KR)
(74) Representative: Mammel und Maser
(86) International application number: PCT/KR2013/005303
(87) International publication number: WO 2014/204020

(57) **Abstract**

The present invention relates to a curing apparatus for a 3D printer, using an ultraviolet light emitting diode (UV-LED), and specifically, to a curing apparatus using an UV-LED, which is arranged and designed so as to coincide with various 3D printing processes. According to one embodiment of the present invention, the curing apparatus for the 3D printer, using the UV-LED, is arranged and designed so as to coincide with various printing processes, thereby maximally preventing heat generation during a curing step, improving product productivity, producing a high-quality three-dimensional stereoscopic image, enabling the 3D printer to have low power consumption, being lightweight, and being miniaturized, and contributing to the popularization of the 3D printer by expanding the fields of utilization thereof.

## Description

### Technical field

The present invention relates to curing apparatuses for 3D printers using ultraviolet light emitting diodes (UV-LEDs), and more specifically to curing apparatuses using UV-LEDs, which are arranged and designed so as to coincide with various 3D printing processes.

### Background art

3D printing, which is opening up an era of manufacturing customized products and gaining prominence as a next-generation precision processing in new business areas including medical and biotech industries, etc., is a technology producing three-dimensional objects by controlling X, Y, and Z axes of material injection apparatus and curing apparatus for printers. The technology generally adopts additive manufacturing, which continuously reconstitutes two-dimensional cross-sectional patterns and prints objects layer by layer, to create laminated layers.

For high-quality, high-speed manufacturing of three-dimensional objects by such continuous additive manufacturing, a highly advanced material curing technology is a prerequisite. Examples of the material curing technologies typically include those using heat (fused deposition modeling: FDM), laser (selective laser sintering: SLS), or UV light (stereolithography apparatus: SLA).

Meanwhile, the material curing method using heat essentially requires supporting structures during the material curing process and long manufacturing times during the manufacturing process. The material curing method using laser requires a broad working space for generating lasers and increases the burden of process costs. Accordingly, the material curing method using ultraviolet (UV) light is preferred since it causes relatively less manufacturing times and costs to be incurred for maintenance and enables the production of high-quality products.

The material curing method using lamp-type UV, which is conventionally used as a material curing method using UV light, is innovatively advantageous in improving printing quality and productivity, compared with a general thermal curing method, and thus is used in various industries. However, in order to perform curing, the curing method using lamp-type UV is required to maintain the internal temperature of the lamp at 4500°C to 4800°C, thereby generating a great amount of heat. Thus, the method is disadvantageous in that there are limitations in improving quality and productivity, and that it generates a great amount of power consumption.

### Summary of invention

The present invention is to resolve the above problems of the related art. It is an object of the present invention to provide a curing apparatus for a 3D printer using an ultraviolet light emitting device (UV-LED), capable of producing a 3D shape at high speed at room temperature (about 25°C) without thermal generation, in a curing process of a 3D printer, and effectively performing the curing process by combining the various types of material injection apparatus for 3D printers with their optimal methods according to the purposes of the printing processes.

In order to achieve the above objects, a curing apparatus for a 3D printer using a UV-LED according to an embodiment of the present invention may perform a curing process on a light-curable polymer material using at least one of a linear UV-LED emitting a wavelength of light in one direction or a diffusing UV-LED emitting a wavelength of light in diverse directions.

Here, the light-curable polymer material may be cured using a plurality of linear or diffusing UV-LEDs, and the curing process may be performed by emitting at least one wavelength of light from the plurality of UV-LEDs.

Meanwhile, when the light-curable polymer material is injected onto a substrate through a material injection apparatus, the curing apparatus may be installed in a lateral side of a point of injecting the light-curable polymer material on the substrate, with a predetermined space with the substrate, to perform the curing process by emitting light in a direction parallel to the substrate.

Meanwhile, when the light-curable polymer material is injected through a material injection apparatus, the UV-LED may be integrated in the material injection apparatus and emit light toward a point injecting the light-curable polymer material, so that a curing process is performed immediately upon the injection of the light-curable polymer material.

Here, the light emitting direction of the UV-LED may be controllable by an external controller.

Here, a blocking case with a predetermined thickness may be provided adjacent to a point where the injection of the light-curable polymer material is initiated, to block introduction of light emitted from the UV-LED into the material injection apparatus due to light scattering, and the blocking case may form a hole of a minimum size, capable of injecting the light-curable polymer material.

Meanwhile, when the light-curable polymer material is injected through the hole with a predetermined size formed at a tip of the material injection apparatus through the material injection apparatus in the shape of a ballpoint pen, the UV-LED may be adjacent to the hole and emit light toward a point injecting the light-curable polymer material.

Here, a plurality of UV-LEDs may be formed around the circumference of the material injection apparatus.

Preferably, the curing apparatus may perform a curing process, while moving along the same path as the material injection apparatus.

Also, the curing apparatus may emit light through the UV-LED selectively only when the light-curable polymer material is injected through the material injection apparatus.

Meanwhile, when a curing process is performed on the light-curable polymer material contained in a predetermined vessel in a photolithography manner using the linear UV-LED, the curing process may be performed positioning a plate movable in a vertical direction, included in the vessel, according to a 3D shape to be manufactured.

Yet, when a curing process is performed on the light-curable polymer material contained in a predetermined vessel in a photolithography manner using the diffusing UV-LED, the curing process may be performed through a photo mask according to a 3D shape to be manufactured in the upper part of the light-curable polymer material, positioning a plate movable in a vertical direction, included in the vessel, according to the 3D shape to be manufactured.

A lens in a predetermined shape may be attached to an area generating light of the linear UV-LED, for emitting light in a predetermined shape through the linear UV-LED.

A curing process may be performed on a light-curable polymer material included on a substrate introduced into an area where light is radiated from the UV-LED, while a plurality of UV-LEDs are connected to each other continuously in any shape of arch, line, or plane.

According to an embodiment of the present invention, a curing apparatus for a 3D printer using a UV-LED is arranged and designed so as to be coincide with various 3D printing processes, thereby maximally preventing heat generation during a curing step, improving product productivity, producing a high-quality three-dimensional stereoscopic image, enabling the 3D printer to have lower power consumption, being lightweight, and being compact, and contributing to the popularization of the 3D printer by expanding the fields of utilization thereof.

### Brief description of the drawings

The accompanying drawings incorporated into part of the detailed description for helping better understand the present invention provide embodiments of the present invention and explain the technical spirit of the present invention along with the detailed description of the invention.
Fig. 1(a) to 1(d) are views illustrating a linear/diffusing UV-LED according to an embodiment of the present invention;
Fig. 2 is a view illustrating a curing apparatus for a 3D printer using a plurality of UV-LEDs emitting different wavelengths of light according to an embodiment of the present invention;
Fig. 3(a) and 3(b) are views illustrating a curing apparatus for a 3D printer using a UV-LED applied to inkjet printing according to an embodiment of the present invention;
Fig. 4(a) to 4(d) are views illustrating a curing apparatus for a 3D printer using a UV-LED installed in a material injection apparatus according to an embodiment of the present invention;
Fig. 5 is a view illustrating a plurality of curing apparatuses for 3D printers using UV-LEDs installed in a material injection apparatus according to an embodiment of the present invention;
Fig. 6 is a view illustrating the control of a light emitting direction of a curing apparatus for a 3D printer using a UV-LED according to an embodiment of the present invention;
Fig. 7 is a view illustrating a selective curing process of a curing apparatus for a 3D printer using a UV-LED according to an embodiment of the present invention;
Fig. 8 is a view illustrating a curing apparatus for a 3D printer using a UV-LED including a blocking case according to an embodiment of the present invention;
Fig. 9 is a view illustrating a curing apparatus for a 3D printer using a UV-LED applied to an electron beam-type material injection apparatus according to an embodiment of the present invention;
Fig. 10(a) and 10(b) are views illustrating a curing apparatus for a 3D printer using a UV-LED applied to a spray-type material injection apparatus according to an embodiment of the present invention;
Fig. 11(a) and 11(b) are views illustrating a curing process by a curing apparatus for a 3D printer using a liner UV-LED in a photolithography manner according to an embodiment of the present invention;
Fig. 12(a) and 12(b) are views illustrating a curing process by a curing apparatus for a 3D printer using a diffusing UV-LED in a photolithography manner according to an embodiment of the present invention;
Fig. 13 is a view illustrating a curing apparatus for a 3D printer using a UV-LED applied to a ballpoint pen-shaped material injection apparatus according to an embodiment of the present invention;
Fig. 14(a) and 14(b) are views illustrating formation of light emitted from a UV-LED by attaching a lens with a predetermined shape according to an embodiment of the present invention; and
Fig. 15(a) and 15(b) are views illustrating a curing apparatus for a 3D printer using an arch-shaped UV-LED according to an embodiment of the present invention.

### Best mode for carrying out the invention

The present invention relates to a curing apparatus for a 3D printer using an ultraviolet light emitting diode (UV-LED), and more specifically to a curing apparatus using a UV-LED which is arranged and designed so as to coincide with 3D printing processes.

The curing apparatus for 3D printer using UV-LED according to an embodiment of the present invention may be applied to printing processes through various types of material injection apparatus including ink-jet, screw, oil pressure, air pressure, photolithography, microlithography, electron beam, piston, pen, spray types, and the like. The curing apparatus may perform a curing process at high speed at room temperature without thermal generation by controlling the type (e.g., linear or diffusing), number, arrangement, etc., of the UV-LED, taking into account the purposes of printing processes and the shape, operation properties, etc., of the material injection apparatus.

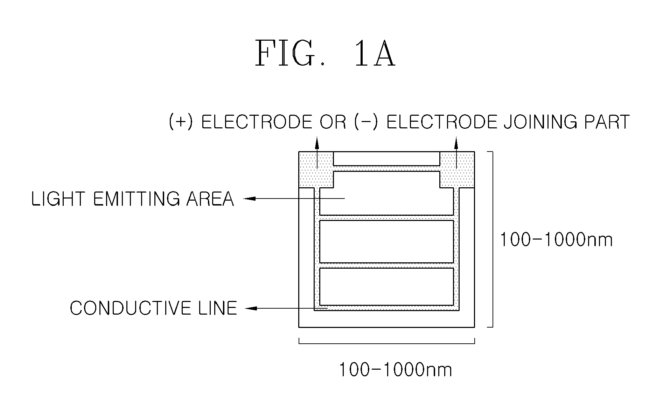

Fig. 1(a) to 1(d) are views illustrating a linear/diffusing UV-LED according to an embodiment of the present invention.

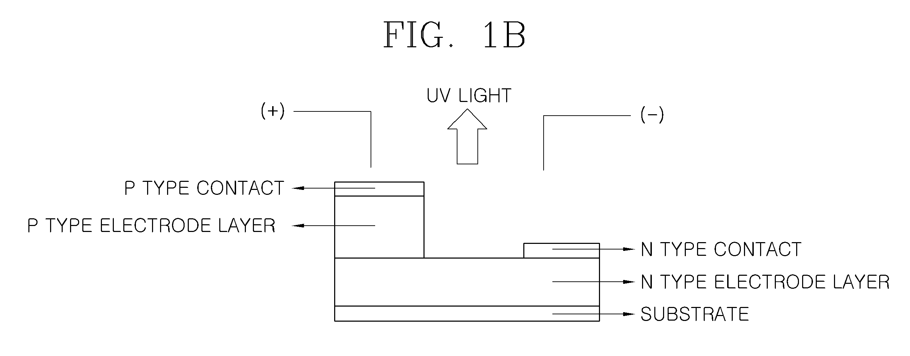

Fig. 1(a) is a plan view illustrating a UV-LED according to an embodiment of the present invention. Fig. 1(b) is a side view of a UV-LED according to an embodiment of the present invention.

Referring to Fig. 1(a) and 1(b), the UV-LED according to an embodiment of the present invention may be implemented by including (+) and (-) electrodes to which an external power source is applied for emitting light on a substrate and a conductive line which is electrically connected to the electrodes. Specifically, the (+) electrode may be implemented by locating a p-type electrode on an n-type electrode layer formed on the substrate, and forming a p-type joining part on the p-type electrode. The (-) electrode may be implemented by forming an n-type joining part on the n-type electrode.

The UV-LED may emit ultraviolet light from areas surrounded by the conductive line upon application of an external power source to the (+) and (-) electrodes. The ultraviolet light emitting form may be properly selected from a linear or diffusing type to coincide with the purpose of use or usage of the curing apparatus for 3D printer using UV-LED according to an embodiment of the present invention.

Also, the UV-LED may be manufactured in various sizes of length and width in the range of 100 nm to 1000 nm to coincide with the purpose of use or usage of the curing apparatus.

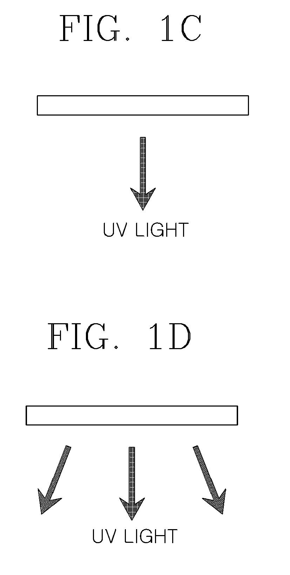

Fig. 1(c) is a side view illustrating a linear UV-LED according to an embodiment of the present invention. Fig. 1(d) is a side view illustrating a diffusing UV-LED according to an embodiment of the present invention.

Referring to Fig. 1(c) and 1(d), the linear UV-LED may emit a wavelength of light in one direction, and the diffusing UV-LED may emit a wavelength of light in diverse directions.

In the curing apparatus for 3D printer using UV-LED, the UV-LED may be properly selected from a linear or diffusing type to be applied to printing processes through various types of material injection apparatus, taking into account the purpose of the printing processes and the shape, operation properties, etc., of the material injection apparatus. For example, when curing a particular area of a light-curable polymer material injected at high speed through the material injection apparatus, a linear UV-LED would be preferably used. When manufacturing a specific 3D shape by large area curing or a photo mask, a diffusing UV-LED would be preferably used.

The curing apparatus for 3D printer using UV-LED according to an embodiment of the present invention may be manufactured to be capable of controlling light emitting operation of the UV-LED for manufacturing a stereoscopic shape coinciding with the purpose and a stereoscopic shape of high quality. For example, the curing apparatus for 3D printer using UV-LED may be manufactured such that the application of an external power source to the (+) and (-) electrodes formed in the UV-LED is turned freely on/off through a separate external switch.

Meanwhile, a curing apparatus for a 3D printer using a UV-LED according to an embodiment of the present invention may be formed by consecutively arranging a plurality of UV-LEDs emitting different wavelengths of light for effectively performing curing processes with various light-curable polymer materials.

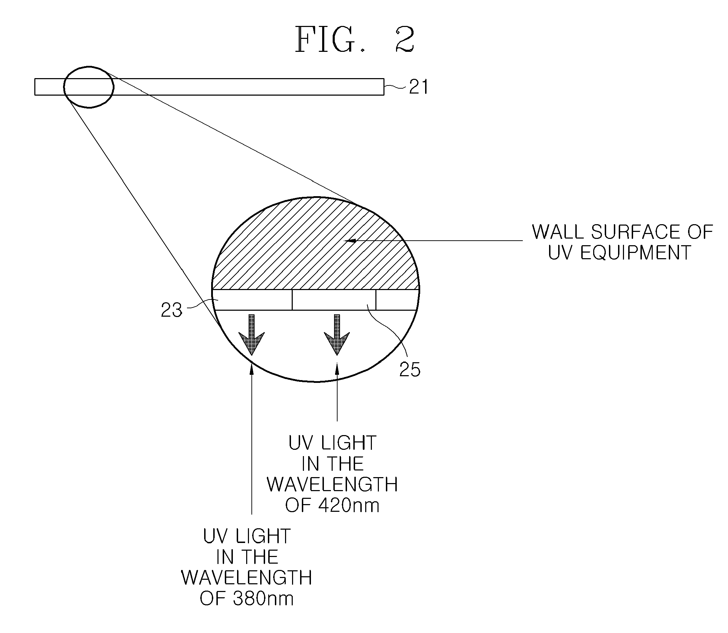

Fig. 2 is a view illustrating a curing apparatus for a 3D printer using a plurality of UV-LEDs emitting different wavelengths of light according to an embodiment of the present invention

Referring to Fig. 2, as shown in the enlarged view of a portion of the curing apparatus 21 for 3D printer using UV-LED according to an embodiment of the present invention, a simultaneous curing process with various types of light-curable polymer materials may be effectively performed by consecutively arranging a linear (or diffusing) UV-LED 23 emitting light in the wavelength range of 380 nm and a linear (or diffusing) UV-LED 25 emitting light in the wavelength range of 420 nm.

Hereinafter, there are provided examples of using the above-described curing apparatus for 3D printer using UV-LED in printing processes through various types of material injection apparatus.

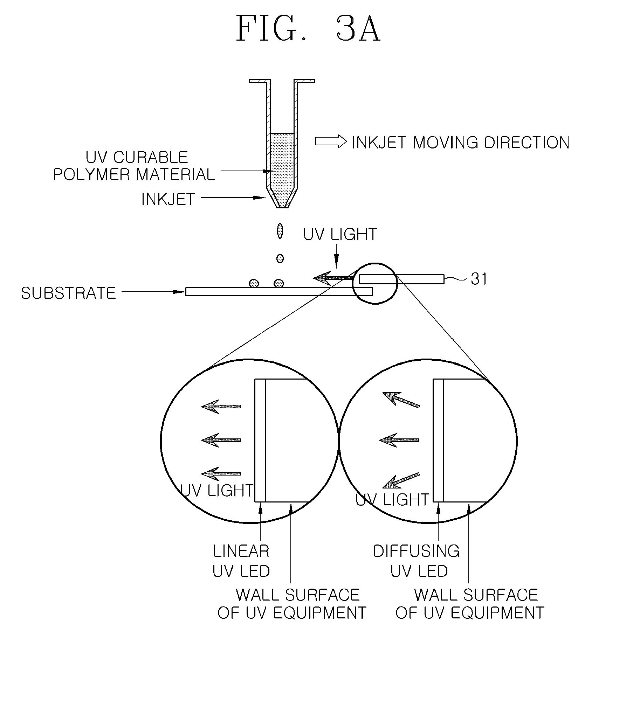

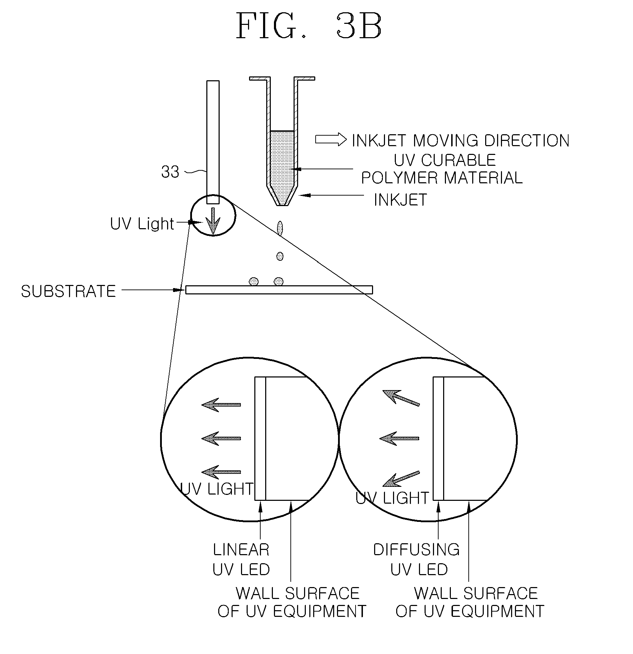

Fig. 3(a) and 3(b) are views illustrating a curing apparatus for a 3D printer using a UV-LED applied to inkjet printing according to an embodiment of the present invention.

Referring to Fig. 3(a), the curing apparatus 31 for 3D printer including UV-LED according to an embodiment of the present invention is installed in a lateral side of a point injecting a light-curable polymer material of an inkjet-type material injection apparatus, with a predetermined space, so as not to contact the substrate, and moves along the same path as the inkjet-type material injection apparatus, to perform a curing process by emitting ultraviolet light with a predetermined wavelength in a direction parallel to the substrate.

Referring to Fig. 3(b), the curing apparatus 33 for 3D printer including UV-LED according to an embodiment of the present invention is installed in an adjacent lateral side parallel to an inkjet-type material injection apparatus, and moves along the same path as the inkjet-type material injection apparatus, to perform a curing process by emitting ultraviolet light with a predetermined wavelength in a direction perpendicular to the substrate.

As can be understood from the enlarged top view of a portion of the UV-LED of the curing apparatus 31 for 3D printer using UV-LED, a curing process may be performed by properly selecting any one of a linear UV-LED or a diffusing UV-LED generating one wavelength according to the purposes of 3D printing processes.

Next, there are provided application examples of a curing apparatus for 3D printer using UV-LED to printing processes through material injection apparatus in screw, air pressure, oil pressure, and piston types.

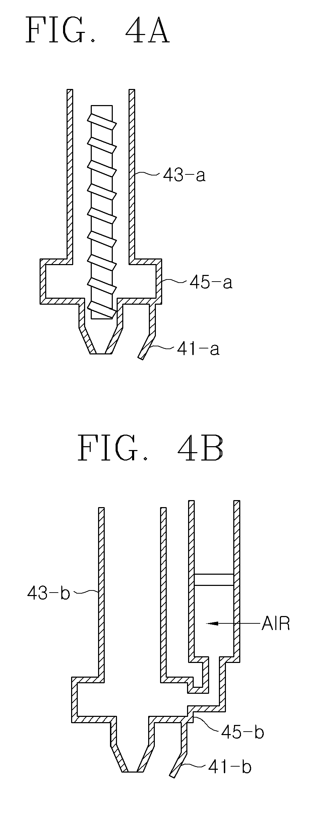

Fig. 4(a) is a view illustrating a curing apparatus for a 3D printer using a UV-LED installed in a screw-type material injection apparatus according to an embodiment of the present invention.

As shown in Fig. 4(a), when applying the curing apparatus 41-a for 3D printer using linear/diffusing UV-LED according to an embodiment of the present invention to a printing process through the screw-type material injection apparatus 43-a, the curing apparatus 41-a may be preferably installed on the bottom of a projection 45-a formed in a nozzle of the material injection apparatus 43-a, with the UV-LED toward the point injecting a light-curable polymer material, in order to perform an immediate curing process at high speed upon injection of the light-curable polymer material through the material injection apparatus 43-a and move along the same direction as the material injection apparatus 43-a, in a simple manner.

Fig. 4(b) is a view illustrating a curing apparatus for a 3D printer using a UV-LED installed in an air pressure-type material injection apparatus according to an embodiment of the present invention.

As shown in Fig. 4(b), when applying the curing apparatus 41-b for 3D printer using linear/diffusing UV-LED according to an embodiment of the present invention to a printing process through the air pressure-type material injection apparatus 43-b, the curing apparatus 41-b may be preferably installed on the bottom of a projection 45-b formed in a nozzle of the material injection apparatus 43-b, with the UV-LED toward the point injecting a light-curable polymer material, in order to perform an immediate curing process at high speed upon injection of the light-curable polymer material through the material injection apparatus 43-b and move along the same direction as the material injection apparatus 43-b, in a simple manner.

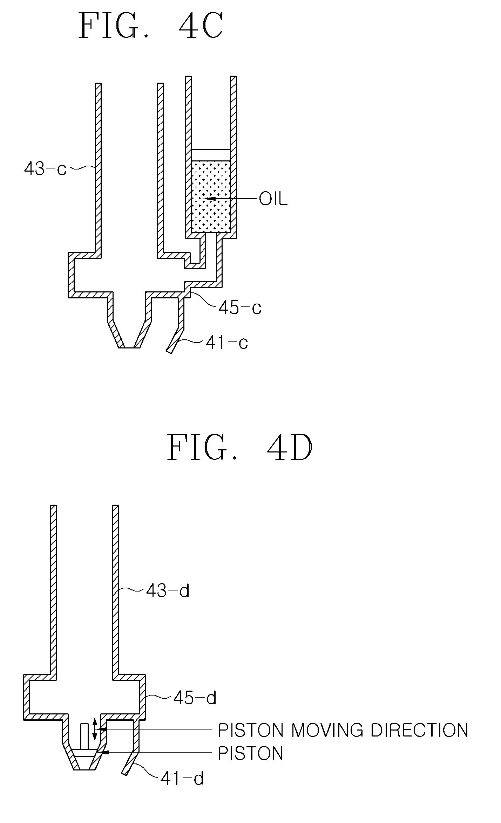

Fig. 4(c) is a view illustrating a curing apparatus for a 3D printer using a UV-LED installed in an oil pressure-type material injection apparatus according to an embodiment of the present invention.

As shown in Fig. 4(c), when applying the curing apparatus 41-c for 3D printer using linear/diffusing UV-LED according to an embodiment of the present invention to a printing process through the oil pressure-type material injection apparatus 43-c, the curing apparatus 41-c may be preferably installed on the bottom of a projection 45-c formed in a nozzle of the material injection apparatus 43-c, with the UV-LED toward the point injecting a light-curable polymer material, in order to perform an immediate curing process at high speed upon injection of the light-curable polymer material through the material injection apparatus 43-c and move along the same direction as the material injection apparatus 43-c, in a simple manner.

Fig. 4(d) is a view illustrating a curing apparatus for a 3D printer using a UV-LED installed in a piston-type material injection apparatus according to an embodiment of the present invention.

As shown in Fig. 4(d), when applying the curing apparatus 41-d for 3D printer using linear/diffusing UV-LED according to an embodiment of the present invention to a printing process through the piston-type material injection apparatus 43-d, the curing apparatus 41-d may be preferably installed on the bottom of a projection 45-d formed in a nozzle of the material injection apparatus 43-d, with the UV-LED toward the point injecting a light-curable polymer material, in order to perform an immediate curing process at high speed upon injection of the light-curable polymer material through the material injection apparatus 43-d and move along the same direction as the material injection apparatus 43-d, in a simple manner.

The curing apparatus for 3D printer using UV-LED installed in the material injection apparatus in the screw, air pressure, oil pressure, and piston types, explained above in connection with Fig. 4(a) to 4(d), may determine the wavelength of light generated from the UV-LED according to the wavelength property of the used light-curable polymer material. In the case of a printing process using a light-curable polymer material having various wavelength properties, a curing process may be effectively performed by properly adjusting and designing the number and arrangement of UV-LED generating different wavelengths of light. Also, the type of UV-LED, e.g., linear/diffusing type, may be properly selected according to the purposes of printing processes.

Also, a plurality of curing apparatuses for 3D printers using UV-LEDs may be installed in the material injection apparatus, to perform radiation of diverse wavelengths of light from different angles to coincide with the purposes or circumstances of a printing process.

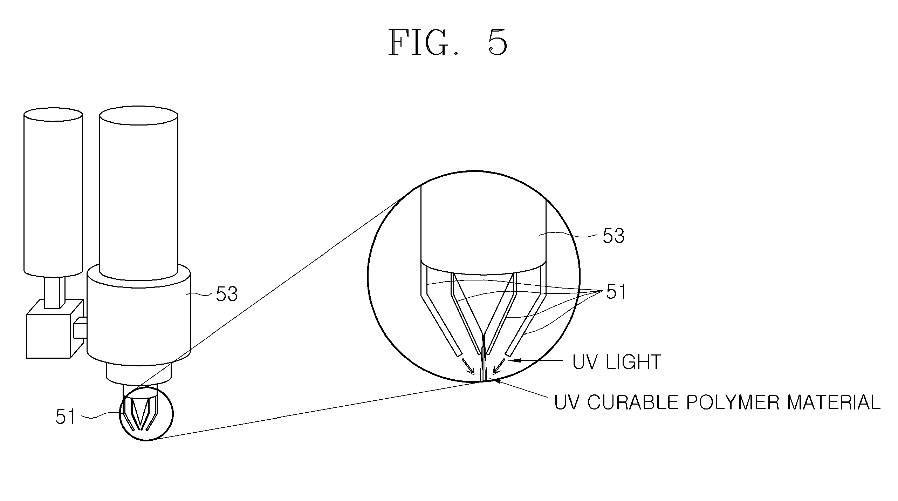

Fig. 5 is a view illustrating a plurality of curing apparatuses for 3D printers using UV-LEDs installed in a material injection apparatus according to an embodiment of the present invention.

Referring to Fig. 5, as can be seen from the enlarged view of a portion of a plurality of curing apparatuses 51 for 3D printers using UV-LEDs installed in the material injection apparatus 53 in a screw, air pressure, oil pressure, or piston type, the material injection apparatus 53 may include a plurality of curing apparatus 51 and the operation of the curing apparatus 51 is controlled to selectively emit light, thereby radiating diverse wavelengths of light from different angles/distances and effectively performing the curing.

Meanwhile, the curing apparatus for 3D printer using UV-LED according to an embodiment of the present invention may be manufactured to prevent the curing occurring in a nozzle of the light-curable polymer material due to light scattering by the operation of the curing apparatus for 3D printer, before injecting a light-curable polymer material, and to properly control the light emitting direction of the curing apparatus for 3D printer for effectively performing the curing. Also, the curing apparatus for 3D printer using UV-LED may be manufactured to emit light only while the light-curable polymer material is injected, to minimize the light scattering. Further, a separate blocking case may be installed in order to protect the light-curable polymer material in the nozzle from the light scattering.

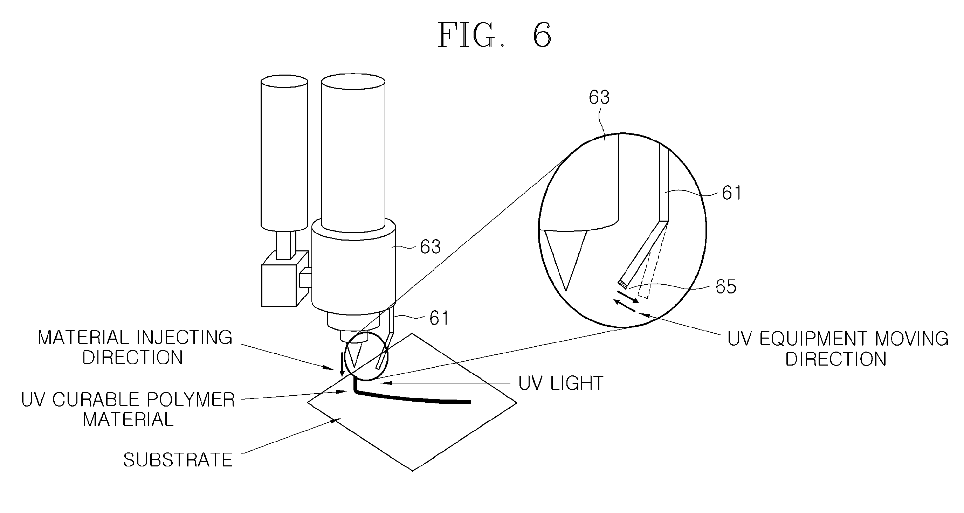

Fig. 6 is a view illustrating the control of a light emitting direction of a curing apparatus for a 3D printer using a UV-LED according to an embodiment of the present invention

Referring to Fig. 6, the curing apparatus 61 for a 3D printer using a UV-LED installed in the material injection apparatus 63, etc., in a screw, air pressure, oil pressure, or piston type, to perform a curing process of a light-curable polymer material injected onto a substrate through the material injection apparatus 63 may be manufactured to prevent the curing occurring in a nozzle from light scattering resulting from light emitting by the operation of the curing apparatus 61, before injecting the light-curable polymer material, and to properly control the light emitting direction of the curing apparatus 61, for effectively performing the curing.

For example, as can be seen from the enlarged view of a portion of performing a curing process, the direction of light emitted from the UV-LED 65 may be effectively controlled by manufacturing a joint where the UV-LED 65 is formed in the curing apparatus 61 to be movable by the control from outside. Here, the control from outside on the joint where the UV-LED 65 is formed may be performed by including a charge coupled device (CCD) camera or a laser sensor, to control the movement of UV-LED 65 in a way of spatially coordinating the location of the UV-LED 65 through a computer and designating the moving coordinate based thereon. In this case, the UV-LED 65 is preferably manufactured in a linear type to properly control the light emitting direction.

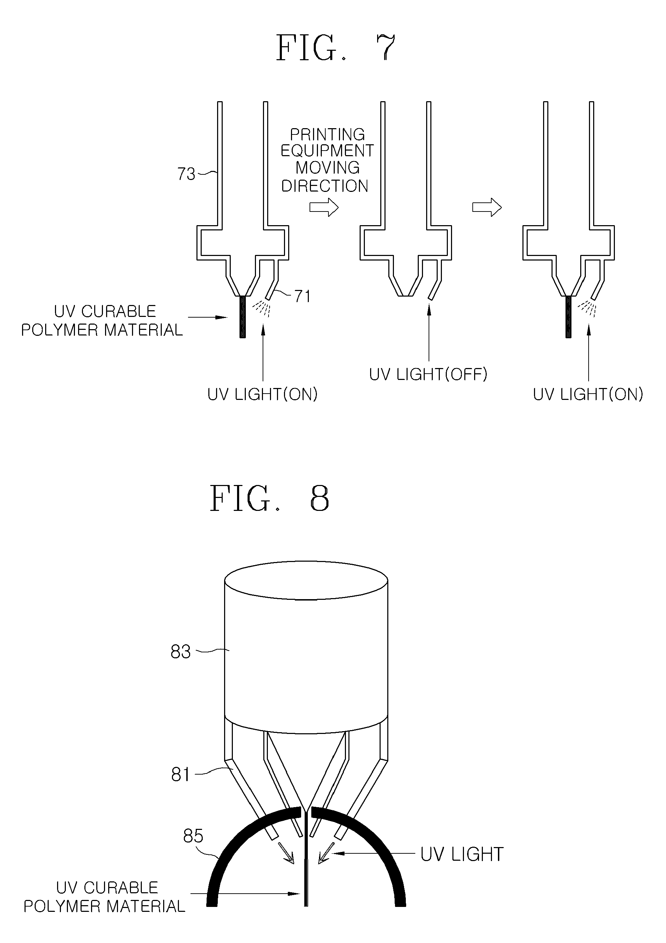

Fig. 7 is a view illustrating a selective curing process of a curing apparatus for a 3D printer using a UV-LED according to an embodiment of the present invention.

Referring to Fig. 7, the curing apparatus 71 for 3D printer using UV-LED installed in the material injection apparatus 73 in a screw, air pressure, oil pressure, or piston type may be manufactured to emit light only while a light-curable polymer material is injected from the material injection apparatus 73, to minimize the curing occurring in a nozzle due to light scattering before injecting the light-curable polymer material and to prevent unnecessary power consumption entailed in the curing process.

For example, the light may be controlled to be emitted through the UV-LED, while the material injection apparatus 73 injects the light-curable polymer material onto a target injecting point, and not to be emitted through the UV-LED during movement to a next target injecting point, after the material injection apparatus 73 completes the injection of the light-curable polymer material. When the material injection apparatus 73 completes the movement to the next target injecting point and injects the light-curable polymer material, the curing apparatus 71 may control the light to emit again.

Fig. 8 is a view illustrating a curing apparatus for a 3D printer using a UV-LED including a blocking case according to an embodiment of the present invention.

Referring to Fig. 8, the curing apparatus 81 for 3D printer using UV-LED according to an embodiment of the present invention may include a separate blocking case 85 blocking light scattering adjacent to a point where the injection of a light-curable polymer material is initiated, to minimize the curing in a nozzle due to light scattering before injecting the light-curable polymer material. In particular, the blocking case 85 may be effective in blocking light introduction into a nozzle due to light scattering occurring from diverse angles during a curing process through the plurality of curing apparatuses 81 for 3D printers using UV-LEDs installed in the material injection apparatus 83 in a screw, air pressure, oil pressure, or piston type.

Specifically, the blocking case 85 may include a hole so that the light-curable polymer material is injected from the material injection apparatus 83. The hole is formed with a predetermined thickness, adjacent to a point where the injection of the light-curable polymer material is initiated, thereby blocking light introduction from directions excluding the direction injecting the light-curable polymer material. For example, the blocking case may be implemented in an arched shape with a predetermined thickness, providing a hole with a minimum size capable of injecting the light-curable polymer material at a point where the injection of the light-curable polymer material is initiated.

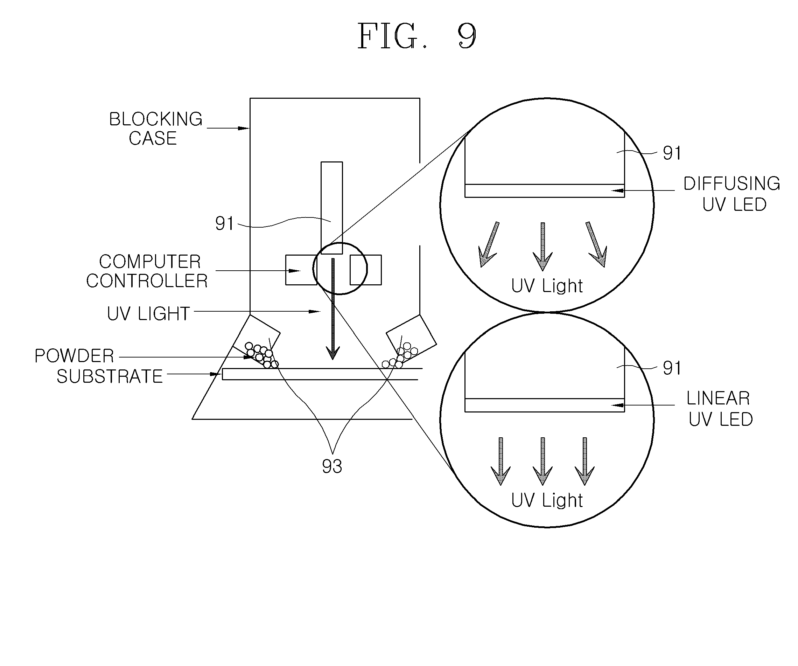

Fig. 9 is a view illustrating a curing apparatus for a 3D printer using a UV-LED applied to an electron beam-type material injection apparatus according to an embodiment of the present invention.

Referring to Fig. 9, as can be seen from the enlarged view of a portion of the curing apparatus 91, the curing apparatus 91 using a UV-LED included in the upper part of the electron beam-type material injection apparatus 93 injecting a light-curable polymer material in the form of powder onto a substrate, which controls the light emitting through a computer controller, may properly select the light emitting form from any one of a linear or diffusing UV-LED according to the purposes of printing processes. A predetermined 3D shape may be manufactured on the substrate by a process of controlling the light to be emitted through the UV-LED of the curing apparatus 91, using the computer controller, while the material in the form of powder is injected from the material injection apparatus 93.

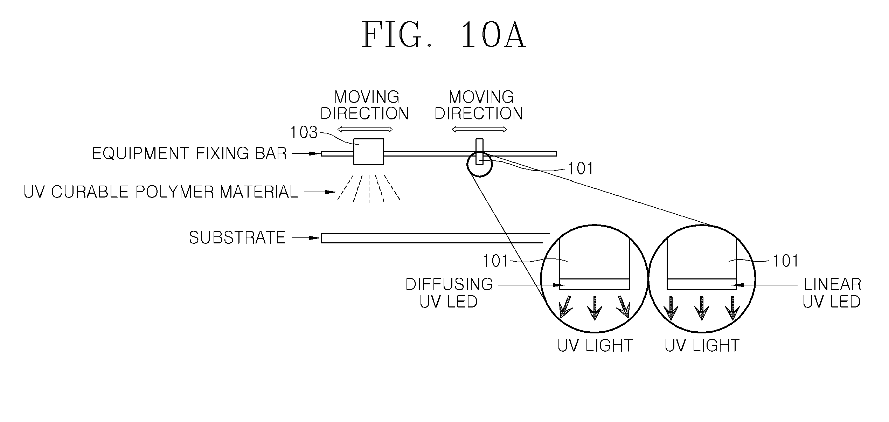

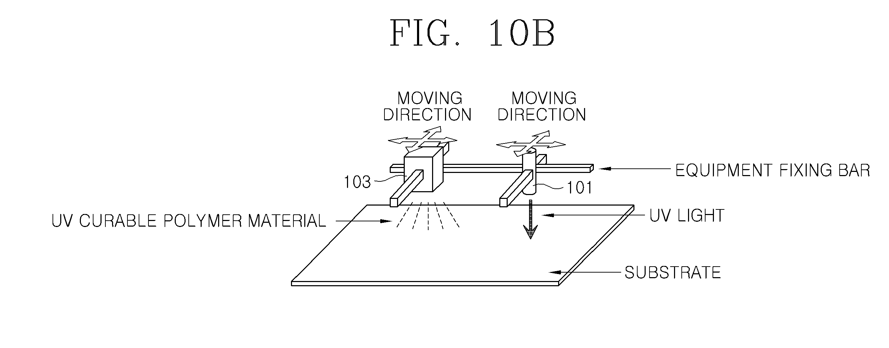

Fig. 10(a) and 10(b) are views illustrating a curing apparatus for a 3D printer using a UV-LED applied to a spray-type material injection apparatus according to an embodiment of the present invention.

Specifically, Fig. 10(a) is a side view illustrating a curing apparatus for a 3D printer using a UV-LED applied to a spray-type material injection apparatus according to an embodiment of the present invention. Fig. 10(b) is a perspective view illustrating the curing apparatus.

Referring to Fig. 10(a) and 10(b), as can be seen from the enlarged view of a portion of the curing apparatus 101, the curing apparatus 101 using a UV-LED, adjacent to the spray-type material injection apparatus 103, on a fixing bar where the spray-type material injection apparatus 103 is also mounted, spraying a light-curable polymer material in the form of mist onto a substrate, may properly select the light emitting form from any one of a linear or diffusing UV-LED according to the purposes of printing processes. Upon movement of the material injection apparatus 103 in an X, Y, or Z axis, a curing process may be performed by moving along the same path as the material injection apparatus 103.

Here, in order to perform the curing process effectively, the curing apparatus 101 may control to emit light through the UV-LED while the light-curable polymer material is injected from the material injection apparatus 103. Preferably, the initiating of the injection of the material from the material injection apparatus 103 may be earlier than the initiating of the emission of light from the UV-LED.

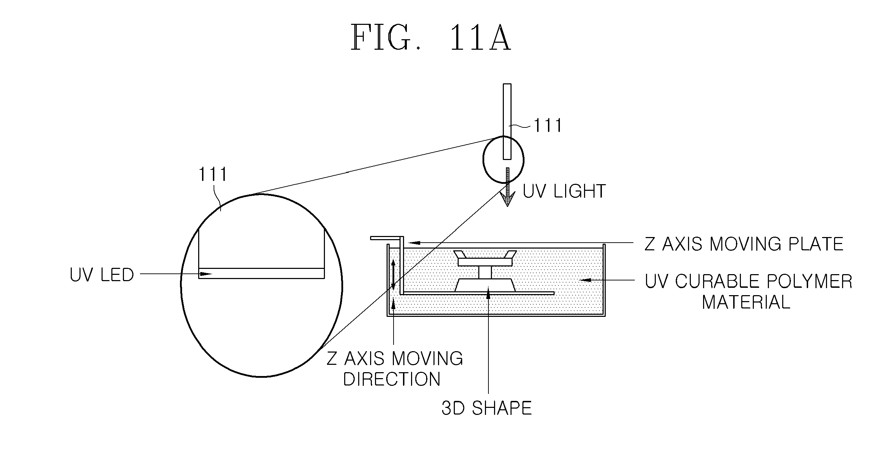

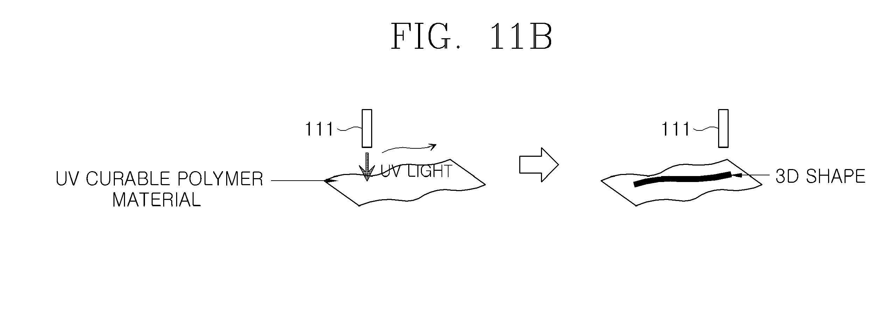

Fig. 11(a) and 11(b) are views illustrating a curing process by a curing apparatus for a 3D printer using a liner UV-LED in a photolithography manner according to an embodiment of the present invention.

Specifically, Fig. 11 (a) is a side view illustrating a curing process in a photolithography manner through a curing apparatus for a 3D printer using a linear UV-LED according to an embodiment of the present invention. Fig. 11(b) is a perspective view illustrating the curing process.

Referring to Fig. 11(a) and 11(b), light may be selectively radiated to a specific area of a light-curable polymer material contained in a predetermined vessel through a process of moving along an X or Y axis the curing apparatus 111 for 3D printer using linear UV-LED according to an embodiment of the present invention and controlling whether to emit light from the UV-LED. Here, in order to manufacture a 3D shape with a 3D effect, a Z-axis moving plate is included in the light-curable polymer material, and a predetermined 3D shape may be manufactured on the Z-axis moving plate through a process of properly moving the Z-axis moving plate along a Z axis according to the 3D shape to be manufactured and a process of controlling whether to emit light from the UV-LED.

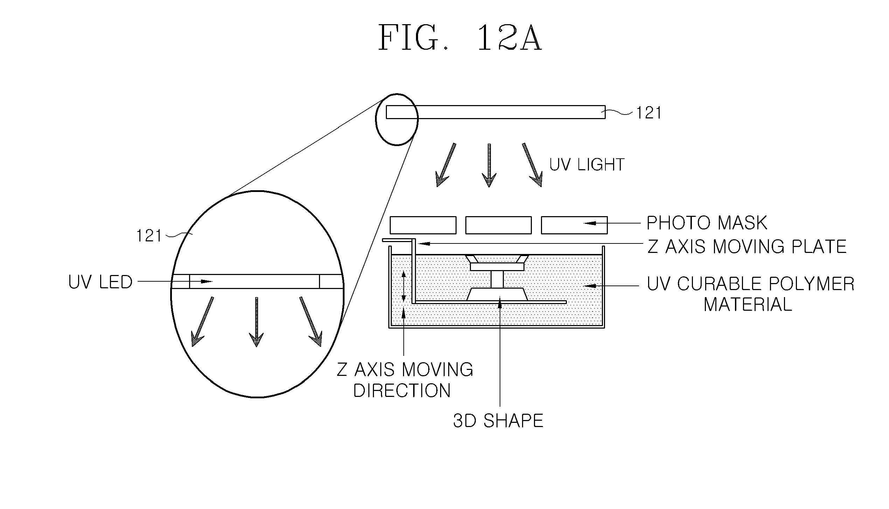

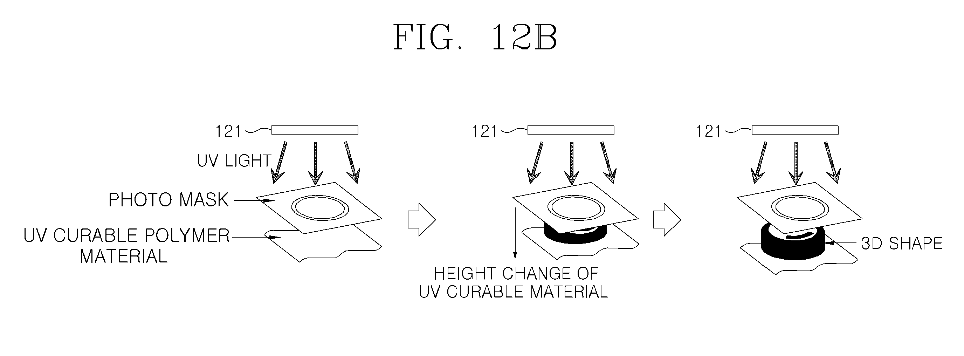

Fig. 12(a) and 12(b) are views illustrating a curing process by a curing apparatus for a 3D printer using a diffusing UV-LED in a photolithography manner according to an embodiment of the present invention.

Specifically, Fig. 12(a) is a side view illustrating a curing process in a photolithography manner through a curing apparatus for 3D printer using a diffusing UV-LED according to an embodiment of the present invention. Fig. 12(b) is a perspective view illustrating the curing process.

Referring to Fig. 12(a) and 12(b), the curing apparatus 121 for 3D printer using a diffusing UV-LED according to an embodiment of the present invention is included in the upper part of a light-curable polymer material contained in a predetermined vessel, and a photo mask according to a 3D shape to be manufactured is installed between the curing apparatus 121 and the light-curable polymer material. Here, in order to express a 3D effect, a Z-axis moving plate is included in the light-curable polymer material, and a predetermined 3D shape may be manufactured on the Z-axis moving plate through a process of properly moving the Z-axis moving plate along a Z axis according to the thickness of 3D shape to be manufactured and a process of controlling whether to emit light from the UV-LED.

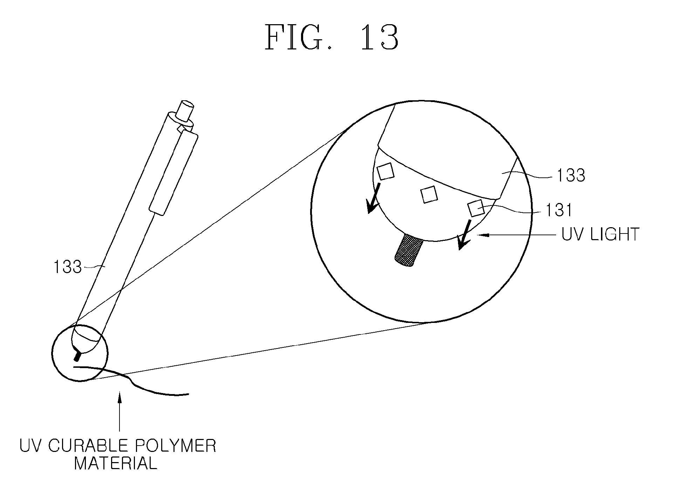

Fig. 13 is a view illustrating a curing apparatus for a 3D printer using a UV-LED applied to a ballpoint pen-shaped material injection apparatus according to an embodiment of the present invention.

Referring to Fig 13, the material injection apparatus 133 in the shape of a ballpoint pen according to an embodiment of the present invention operates according to an act of touching or pressing a predetermined button or pad, and injects a light-curable polymer material through a hole with a predetermined size formed at a tip of the material injection apparatus 133 in the shape of a ballpoint pen, while the act lasts.

Here, the curing apparatus 131 for 3D printer using UV-LED is installed adjacent to the tip of the material injection apparatus 133 in the shape of a ballpoint pen injecting the light-curable polymer material, such that the light from the UV-LED is emitted toward the point of injecting the light-curable polymer material. Preferably, with regard to the properties of a ballpoint pen for use, a plurality of curing apparatuses 131 for 3D printers using UV-LEDs may be included along the circumference of the end of the material injection apparatus 133 in the shape of a ballpoint pen.

The curing apparatus 131 may be manufactured to control whether to emit light manually by a switch, although not shown in the drawings, installed in the material injection apparatus 133 in the shape of a ballpoint pen, and to automatically emit light selectively only when the injection of the light-curable polymer material is initiated through the material injection apparatus 133 in the shape of a ballpoint pen.

Meanwhile, the curing apparatus for 3D printer using UV-LED according to an embodiment of the present invention may emit light in a specific shape by attaching a lens with a predetermined shape carved to an area from which light is emitted through the UV-LED.

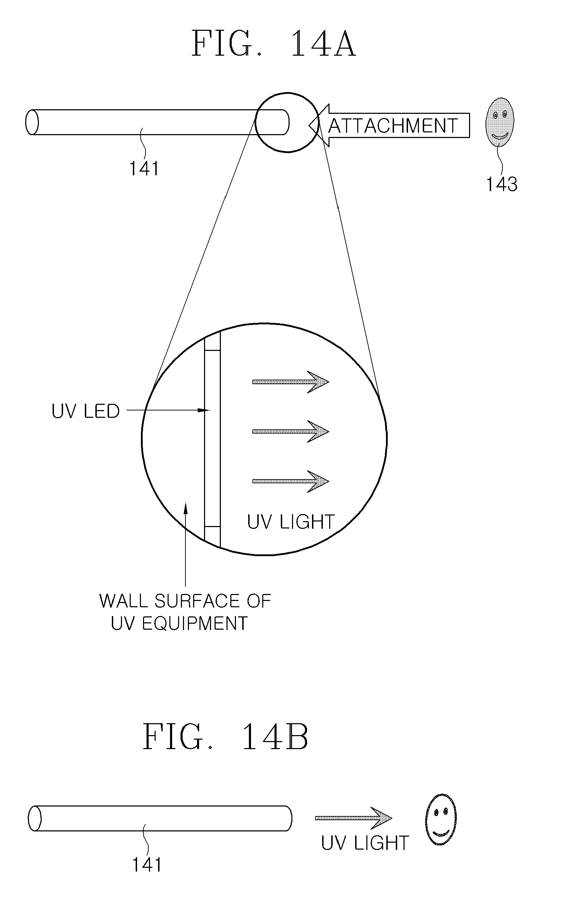

Fig. 14(a) and 14(b) are views illustrating formation of light emitted from a UV-LED by attaching a lens with a predetermined shape according to an embodiment of the present invention.

Referring to Fig. 14(a) and 14(b), a lens 143 with a predetermined shape carved is attached in an area of the curing apparatus 141 for 3D printer using a linear UV-LED, such that the light may be formed and emitted according to the shape carved on the lens 143. Thereby, it is possible to manufacture a 3D object of a predetermined shape in a simple manner and precisely irradiate a particular area with light. Thus, the performance of a curing process may be greatly improved.

Meanwhile, the curing apparatus for 3D printer using UV-LED according to an embodiment of the present invention may be manufactured with the UV-LED in an arch shape, thereby allowing simultaneous curing from multiple angles in a simple manner.

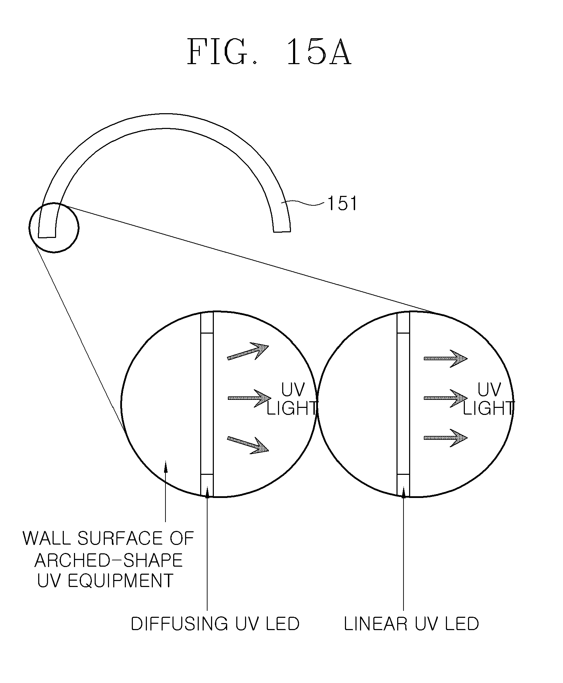

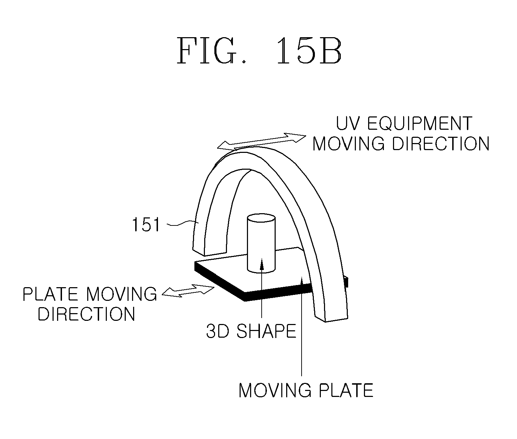

Fig. 15(a) and 15(b) are views illustrating a curing apparatus for a 3D printer using an arch-shaped UV-LED according to an embodiment of the present invention.

Specifically, Fig. 15(a) is a side view illustrating a curing apparatus for a 3D printer using an arch-shaped UV-LED according to an embodiment of the present invention. Fig. 15(b) is a perspective view illustrating a curing process using the curing apparatus.

Referring to Fig. 15(a) and 15(b), the curing apparatus 151 for 3D printer using a linear or diffusing UV-LED according to an embodiment of the present invention is manufactured in an arched shape with the UV-LEDs arranged successively, and the UV-LEDs are arranged successively along the wall surface of the arch, such that light is emitted toward an internal direction of the arch. Thereby, simultaneous curing with the light-curable polymer material on the plate, which passes the inside of the arch-shaped UV-LED, is possible from multiple angles and the productivity of 3D shape manufacturing may be greatly increased.

Meanwhile, the curing apparatus for 3D printer using UV-LED according to an embodiment of the present invention is manufactured in a manner identical or similar to a general curing apparatus for a printer using UV-LED, thereby allowing 3D printing in a previous printing manner. For example, the UV-LEDs are arranged consecutively in a linear or plane shape, so that light is emitted in an internal or unilateral direction of the linear or plane shape, thereby allowing simultaneous curing over a broad area with the light-curable polymer material on the substrate, introduced by the operation of the printer.

It should be understood that the forgoing description is exemplary embodiments of the present invention by way of example only, and that a person skilled in the art can make various changes and modifications without departing from the scope of the present invention.

## Claims

1. A curing apparatus for a 3D printer, the apparatus performing a curing process on a light-curable polymer material using at least one of a linear ultraviolet light emitting diode emitting a wavelength of light in one direction or a diffusing ultraviolet light emitting diode emitting a wavelength of light in diverse directions.

2. The curing apparatus of claim 1, curing the light-curable polymer material using a plurality of linear or diffusing ultraviolet light emitting diodes, wherein the curing process is performed by emitting at least one wavelength of light from the plurality of ultraviolet light emitting diodes.

3. The apparatus of claim 1, wherein when the light-curable polymer material is injected onto a substrate through a material injection apparatus, the apparatus is installed in a lateral side of a point of injecting the light-curable polymer material on the substrate, with a predetermined space with the substrate, to perform the curing process by emitting light in a direction parallel to the substrate.

4. The apparatus of claim 1, wherein when the light-curable polymer material is injected through a material injection apparatus, the ultraviolet light emitting diode is integrated in the material injection apparatus and emits light toward a point injecting the light-curable polymer material, so that a curing process is performed immediately upon the injection of the light-curable polymer material.

5. The apparatus of claim 4, wherein a light emitting direction of the ultraviolet emitting diode is controllable by an external controller.

6. The apparatus of claim 4, comprising a blocking case with a predetermined thickness adjacent to a point where the injection of the light-curable polymer material is initiated, to block introduction of light emitted from the ultraviolet light emitting diode into the material injection apparatus due to light scattering, wherein the blocking case forms a hole of a minimum size, capable of injecting the light-curable polymer material.

7. The apparatus of claim 1, wherein when the light-curable polymer material is injected through the hole with a predetermined size formed at a tip of the material injection apparatus through the material injection apparatus in the shape of a ballpoint pen, the ultraviolet light emitting diode is adjacent to the hole and emits light toward a point injecting the light-curable polymer material.

8. The apparatus of claim 7, forming a plurality of ultraviolet light emitting diodes around the circumference of the material injection apparatus.

9. The apparatus of claims 3 to 6, performing a curing process, while moving along the same path as the material injection apparatus.

10. The apparatus of claims 3 to 8, emitting light through the ultraviolet light emitting diode selectively only when the light-curable polymer material is injected through the material injection apparatus.

11. The apparatus of claim 1, wherein when a curing process is performed on the light-curable polymer material contained in a predetermined vessel in a photolithography manner using the linear ultraviolet light emitting diode, the curing process is performed positioning a plate movable in a vertical direction, included in the vessel, according to the 3D shape to be manufactured.

12. The apparatus of claim 1, wherein when a curing process is performed on the light-curable polymer material contained in a predetermined vessel in a photolithography manner using the diffusing ultraviolet light emitting diode, the curing process is performed through a photo mask according to a 3D shape to be manufactured in the upper part of the light-curable polymer material, positioning a plate movable in a vertical direction, included in the vessel, according to the 3D shape to be manufactured.

13. The apparatus of claim 1, attaching a lens in a predetermined shape to an area generating light of the linear ultraviolet light emitting diode, for emitting light in a predetermined shape through the linear ultraviolet light emitting diode.

14. The apparatus of claim 2, performing a curing process on a light-curable polymer material included on a substrate introduced into an area where light is radiated from the ultraviolet light emitting diode, wherein a plurality of ultraviolet light emitting diodes are connected to each other continuously in any shape of an arch, line, or plane.
